# EUROPEAN PATENT APPLICATION

(11) **EP 4 632 877 A1**
(43) Date of publication of application: **15.10.2025**
(21) Application number: 24752742.7
(22) Date of filing: 30.01.2024
(51) Int. Cl.: H01M 10/613

(54) **ENERGY STORAGE SYSTEM**

(30) Priority: 10.02.2023 CN 202310099765
(71) Applicant: Contemporary Amperex Future Energy Research Institute (Shanghai) Limited, Shanghai 200241 (CN); Contemporary Amperex Technology Co., Limited, Ningde City, Fujian 352100 (CN)
(72) Inventor: SUN, Lijun, Shanghai 201100 (CN); LU, Yanhua, Shanghai 201100 (CN); XU, Pengcheng, Shanghai 201100 (CN); MAO, Zhiyun, Shanghai 201100 (CN); YU, Dongxu, Shanghai 201100 (CN)
(74) Representative: Kraus & Lederer PartGmbB
(86) International application number: PCT/CN2024/074733
(87) International publication number: WO 2024/164886

(57) **Abstract**

The present application provides an energy storage system. The energy storage system includes: an inlet main pipe and an outlet main pipe; a first branch pipe, connected between the inlet main pipe and the outlet main pipe, and including a first inlet branch pipe and a first outlet branch pipe; a second branch pipe, connected between the inlet main pipe and the outlet main pipe, and including a second inlet branch pipe and a second outlet branch pipe; a battery module unit, connected in series between the first inlet branch pipe and the first outlet branch pipe; and a power module unit, connected in series between the second inlet branch pipe and the second outlet branch pipe. The energy storage system enables a shared cooling pipeline design for the power module unit and the battery module unit, simplifying the cooling pipelines and reducing costs.

## Description

### CROSS-REFERENCE TO RELATED APPLICATIONS

The present application claims priority to Chinese Patent Application No. 2023100997654, and filed on February 10, 2023, which is incorporated herein by reference in its entirety.

### TECHNICAL FIELD

The present invention relates to the field of heat dissipation technology, and in particular, to an energy storage system.

### BACKGROUND

Energy storage systems, such as high-voltage direct-connected energy storage valves, are typically composed of multiple energy storage submodules, each including a power module unit and a battery module unit. During operation, the power module unit and the battery module unit generate heat, requiring the design of cooling pipelines to remove the heat generated by each unit. The battery module unit consists of battery cells forming a battery pack, a battery cabinet, or a battery box. However, existing energy storage systems have complex cooling pipelines and high costs.

### SUMMARY

The energy storage system provided by the present application aims to solve the technical problem of existing energy storage systems having complex cooling pipelines and high costs.

To solve the above technical problem, the present application adopts a technical solution as follows: An energy storage system is provided. The energy storage system includes: an inlet main pipe and an outlet main pipe; a first branch pipe, connected between the inlet main pipe and the outlet main pipe, and including a first inlet branch pipe and a first outlet branch pipe; a second branch pipe, connected between the inlet main pipe and the outlet main pipe, and including a second inlet branch pipe and a second outlet branch pipe; a battery module unit, connected in series between the first inlet branch pipe and the first outlet branch pipe; and a power module unit, connected in series between the second inlet branch pipe and the second outlet branch pipe.

The energy storage system provided above includes the inlet main pipe, the outlet main pipe, the first branch pipe, the second branch pipe, the battery module unit, and the power module unit, where the first branch pipe is connected between the inlet main pipe and the outlet main pipe and includes the first inlet branch pipe and the first outlet branch pipe; the second branch pipe is connected between the inlet main pipe and the outlet main pipe and includes the second inlet branch pipe and the second outlet branch pipe; the battery module unit is connected in series between the first inlet branch pipe and the first outlet branch pipe; and the power module unit is connected in series between the second inlet branch pipe and the second outlet branch pipe. This configuration achieves a shared cooling pipeline design for the power module unit and the battery module unit, simplifying the cooling pipelines and reducing costs.

In some embodiments, the first branch pipe and the second branch pipe are arranged in a reverse-return piping configuration.

The above solution enables the path lengths of the cooling pipelines corresponding to the first branch pipe and the second branch pipe to be consistent, that is, the battery module unit connected in series between the first inlet branch pipe and the first outlet branch pipe and the power module unit connected in series between the second inlet branch pipe and the second outlet branch pipe correspond to cooling pipelines of the same length. Consequently, with identical pipe diameters, the flow rates in the cooling pipelines of the battery module unit and the power module unit are substantially consistent, thereby achieving uniform flow distribution among different battery module units.

In some embodiments, the first branch pipe and the second branch pipe have different pipe diameters.

The above solution employs different pipe diameters for the first branch pipe and the second branch pipe to ensure that the flow resistance of the coolant flowing through the first branch pipe and the second branch pipe is identical, thereby achieving precise flow distribution between the power module unit and the battery module unit.

In some embodiments, a resistance element is also included. The resistance element is disposed within one or more of the first inlet branch pipe, the first outlet branch pipe, the second inlet branch pipe, and the second outlet branch pipe.

The above solution, by placing a resistance element within one or more of the first inlet branch pipe, the first outlet branch pipe, the second inlet branch pipe, and the second outlet branch pipe, allows the resistance element to control the flow rate through the corresponding branch pipe, thereby achieving precise flow distribution between the power module unit and the battery module unit and achieving uniform flow distribution among different battery module units.

In some embodiments, a design flow resistance of the power module unit is greater than a design flow resistance of the battery module unit, the resistance element is disposed within the first inlet branch pipe and/or the first outlet branch pipe; or
the design flow resistance of the power module unit is less than the design flow resistance of the battery module unit, the resistance element is disposed within the second inlet branch pipe and/or the second outlet branch pipe.

In the above solution, when the design flow resistance of the power module unit is greater than the design flow resistance of the battery module unit, the resistance element is disposed within the first inlet branch pipe and/or the first outlet branch pipe. This allows the resistance element to increase the design flow resistance of the battery module unit connected in series between the first inlet branch pipe and the first outlet branch pipe, enabling the design flow resistance of the power module unit and the design flow resistance of the battery module unit to be identical, thereby achieving precise flow distribution between the power module unit and the battery module unit. Alternatively, when the design flow resistance of the power module unit is less than the design flow resistance of the battery module unit, the resistance element is disposed within the second inlet branch pipe and/or the second outlet branch pipe. This allows the resistance element to increase the design flow resistance of the power module unit connected in series between the second inlet branch pipe and the second outlet branch pipe, enabling the design flow resistance of the power module unit and the design flow resistance of the battery module unit to be identical, thereby achieving uniform flow distribution among different battery module units and precise flow distribution between the power module unit and the battery module unit.

In some embodiments, the inlet main pipe is located on a side of the battery module unit and the power module unit closer to the ground, and the outlet main pipe is located on a side of the battery module unit and the power module unit farther from the ground.

The above solution adopts a bottom-in, top-out coolant configuration, ensuring that the gas within the cooling branches of the battery module unit and the power module unit is effectively expelled without requiring additional exhaust valves, thereby reducing costs.

In some embodiments, the battery module unit includes a supply pipe and a return pipe spaced apart along a first direction, multiple branch flow pipes spaced apart along the first direction and connected between the supply pipe and the return pipe, and multiple batteries stacked along the first direction; each battery is connected in series with one branch flow pipe; a bottom end of the supply pipe is connected to the inlet main pipe, and a top end of the return pipe is connected to the outlet main pipe; and multiple branch flow pipes are arranged in a reverse-return piping configuration.

The above solution ensures effective expulsion of gas within the cooling pipelines of the battery module unit. By further arranging multiple branch flow pipes in a reverse-return piping configuration, the path length of the cooling pipeline within each battery module unit can be effectively ensured to be consistent, thereby ensuring uniform flow distribution among different battery module units.

In some embodiments, the energy storage system further includes a valve tower; the valve tower includes multiple layers of supports, each layer of the supports is provided with an energy storage submodule, one inlet main pipe, one outlet main pipe, multiple first branch pipes, and one second branch pipe; and each energy storage submodule includes a power module unit and multiple battery module units, and multiple battery module units are arranged in one-to-one correspondence with multiple first branch pipes.

The above solution enables the energy storage system to be applied in the field of valve tower energy storage valves, ensuring uniform flow distribution among different battery module units in each energy storage submodule on the multiple layers of supports of the valve tower and ensuring effective expulsion of gas within the cooling pipelines of the battery module unit and the power module unit.

In some embodiments, an inlet header pipe and an outlet header pipe are also included; the inlet header pipe and the outlet header pipe are disposed on the valve tower and extend along a height direction of the valve tower; the inlet header pipe is connected to the inlet main pipe on each layer of the supports, and the outlet header pipe is connected to the outlet main pipe on each layer of the supports; a height of an end of the outlet header pipe farther from the ground is greater than a height of the outlet main pipe corresponding to the energy storage submodule on the highest layer.

The above solution ensures that the gas within the cooling pipelines of the battery module unit and the power module unit in each energy storage submodule on each layer of supports of the valve tower is effectively expelled.

In some embodiments, an exhaust valve is further disposed at an end of the outlet header pipe farther from the ground.

In the above solution, due to the high outlet temperature of the outlet header pipe, and based on Dalton's law of partial pressures, adding the exhaust valve is more conducive to the gas expulsion from the cooling pipeline.

In some embodiments, the energy storage system further includes a container; one power module unit and multiple battery module units are disposed within the container; the inlet main pipe is disposed on a bottom wall of the container, and the outlet main pipe is disposed on a top wall of the container with an exhaust valve at one end; and multiple battery module units are arranged in one-to-one correspondence with multiple first branch pipes.

In the above solution, the cooling pipeline introduces water from a lower side of the container and discharges water from an upper side. This achieves consistent flow paths for the cooling pipelines of different battery module units within the container. Additionally, with water being discharged from the upper side and the exhaust valve at one end of the top wall, gas within the battery module units is effectively expelled, achieving uniform flow distribution and effective gas expulsion within different battery module units. Additionally, gas expulsion from a cooling medium improves the heat exchange efficiency of a cold plate within the battery, improving the operational efficiency of the battery.

The above description is merely an overview of the technical solutions of the present application. For a better understanding of the technical means in the present application such that they can be implemented according to the content of the specification, and to make the above and other objectives, features, and advantages of the present application more obvious and easier to understand, the following describes specific embodiments of the present application.

### BRIEF DESCRIPTION OF DRAWINGS

Persons of ordinary skill in the art can clearly understand various other advantages and benefits by reading the detailed description of the preferred embodiments below. The accompanying drawings are merely intended to illustrate the preferred embodiments and are not intended to limit the present application. Moreover, in all the accompanying drawings, the same reference signs represent the same parts. In the accompanying drawings:
FIG. 1 is a top view of a liquid flow direction in an energy storage system provided by an embodiment of the present application;
FIG. 2 is a schematic structural diagram of a three-way structure on an inlet main pipe side;
FIG. 3 is a schematic structural diagram of a three-way structure on an outlet main pipe side;
FIG. 4 is a schematic diagram of a position of a resistance element in a single-branch cooling pipeline;
FIG. 5 is a schematic structural diagram of a battery module unit;
FIG. 6 is a front view of a liquid flow direction in an energy storage system provided by an embodiment of the present application; and
FIG. 7 is a front view of a liquid flow direction in an energy storage system provided by another embodiment of the present application.

### Description of reference signs:

1. inlet main pipe; 2. outlet main pipe; 3. battery module unit; 31. supply pipe; 32. return pipe; 33. battery; 4. power module unit; 5. first branch pipe; 51. first inlet branch pipe; 52. first outlet branch pipe; 6. second branch pipe; 61. second inlet branch pipe; 62. second outlet branch pipe; 7. resistance element; 81. inlet header pipe; 82. outlet header pipe; and 9. exhaust valve.

### DESCRIPTION OF EMBODIMENTS

The following describes in detail some embodiments of technical solutions of the present application with reference to the accompanying drawings. The following embodiments are merely intended for a clearer description of the technical solutions of the present application and therefore are merely used as examples which do not constitute any limitation on the protection scope of the present application.

Unless otherwise defined, all technical and scientific terms used herein shall have the same meanings as commonly understood by persons skilled in the art to which the present application belongs. The terms used herein are merely intended to describe the specific embodiments rather than to limit the present application. The terms "include", "have", and any other variations thereof in the specification, claims, and brief description of drawings of the present application are intended to cover non-exclusive inclusions.

In the descriptions of the embodiments of the present application, the technical terms "first", "second", and the like are merely intended to distinguish between different objects, and shall not be understood as any indication or implication of relative importance or any implicit indication of the number, specific sequence, or primary-secondary relationship of the technical features indicated. In the description of the embodiments of the present application, "multiple" means at least two unless otherwise specifically defined.

In this specification, reference to "embodiment" means that specific features, structures, or characteristics described with reference to the embodiment may be included in at least one embodiment of the present application. The term "embodiment" appearing in various positions in the specification does not necessarily refer to the same embodiment or an independent or alternative embodiment that is exclusive of other embodiments. It is explicitly or implicitly understood by persons skilled in the art the embodiments described herein may be combined with other embodiments.

In the description of some embodiments of the present application, the term "and/or" is only an associative relationship for describing associated objects, indicating that three relationships may be present. For example, A and/or B may indicate the following three cases: presence of only A, presence of both A and B, and presence of only B. Additionally, a character "/" in this specification typically indicates an "or" relationship between contextually associated objects.

In the descriptions of the embodiments of the present application, the term "multiple" means more than two (inclusive). Similarly, "multiple groups" means more than two (inclusive) groups, and "multiple pieces" means more than two (inclusive) pieces.

In the description of the embodiments of the present application, the orientations or positional relationships indicated by the technical terms "center", "longitudinal", "transverse", "length", "width", "thickness", "upper", "lower", "front", "rear", "left", "right", "vertical", "horizontal", "top", "bottom", "inside", "outside", "clockwise", "counterclockwise", "axial", " radial", "circumferential", and the like are based on the orientations or positional relationships as shown in the accompanying drawings. These terms are merely for ease and brevity of description of the embodiments of the present application rather than indicating or implying that the means or components mentioned must have specific orientations or must be constructed or manipulated according to specific orientations, and therefore shall not be construed as any limitation on the embodiments of the present application.

In the description of the embodiments of the present application, unless otherwise specified and defined explicitly, the technical terms "mounting", "connection", "join", and "fastening" should be understood in their general senses. For example, they may refer to a fixed connection, a detachable connection, or an integral connection, may refer to a mechanical connection or electrical connection, and may refer to a direct connection, an indirect connection via an intermediate medium, an internal communication between two elements, or an interaction between two elements. Persons of ordinary skills in the art can understand specific meanings of these terms in the present application as appropriate to specific situations.

The novel high-voltage direct current direct-connected energy storage technology integrates a VSC (voltage source converter, voltage source converter) converter valve with a direct current energy storage valve, offering advantages such as high modularity, good economic benefits, and high operational reliability.

The novel high-voltage alternating current direct-connected energy storage technology integrates a power module with an energy storage battery into a high-voltage alternating current direct-connected energy storage submodule, which is cascaded and connected to an alternating current grid, offering advantages such as high modularity, good economic benefits, and high operational reliability.

The novel high-voltage direct current direct-connected energy storage technology and the novel high-voltage alternating current direct-connected energy storage technology eliminate the need for a transformer to connect to the grid, allowing direct connection to high-voltage grids with voltage levels such as greater than or equal to 1 kV, plus or minus10 kV, plus or minus 35 kV, plus or minus 500 kV, and plus or minus 800 kV.

A high-voltage direct-connected energy storage valve consists of multiple energy storage submodules, each energy storage submodule including a power module unit and a battery module unit. During operation, the power module unit and the battery module unit generate heat, requiring the design of cooling pipelines to remove the generated heat. In related technologies, the power module unit and the battery module unit are typically each connected to separate cooling pipelines to remove heat through their respective cooling pipelines. However, this solution results in complex cooling pipelines and high costs.

Based on this, the inventor of the present application proposes an energy storage system that enables the battery module unit and the power module unit to share the same inlet main pipe and the same outlet main pipe, achieving a design where the power module unit and the battery module unit share the cooling pipeline, simplifying the cooling pipelines, and reducing costs.

The present application is described in detail below with reference to the accompanying drawings and embodiments.

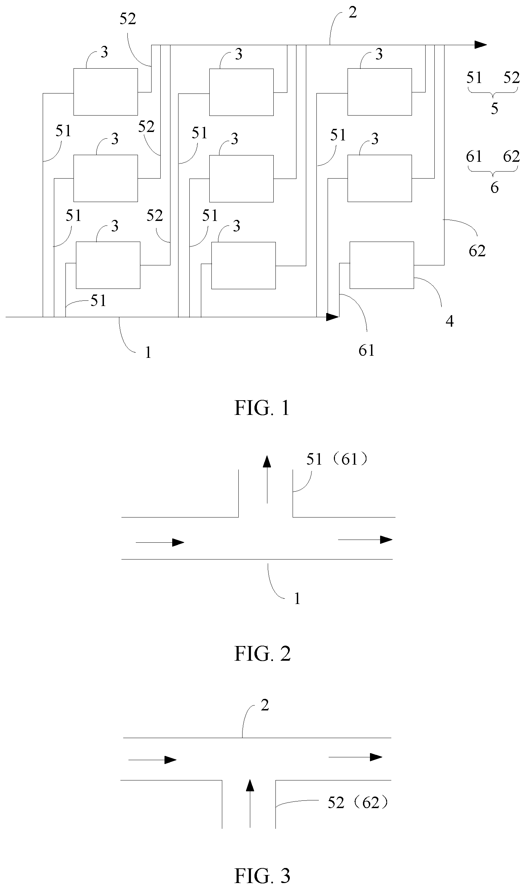

Referring to FIG. 1 to FIG. 3, FIG. 1 is a top view of a liquid flow direction in an energy storage system provided by an embodiment of the present application; FIG. 2 is a schematic structural diagram of a three-way structure on an inlet main pipe side; and FIG. 3 is a schematic structural diagram of a three-way structure on an outlet main pipe side. In this embodiment, an energy storage system is provided. The energy storage system includes an inlet main pipe 1, an outlet main pipe 2, a battery module unit 3, a power module unit 4, a first branch pipe 5, and a second branch pipe 6.

As shown in FIG. 1, the inlet main pipe 1 and the outlet main pipe 2 may be arranged parallel to each other; the first branch pipe 5 is connected between the inlet main pipe 1 and the outlet main pipe 2, and the first branch pipe 5 includes a first inlet branch pipe 51 and a first outlet branch pipe 52. The second branch pipe 6 is connected between the inlet main pipe 1 and the outlet main pipe 2, and the second branch pipe 6 includes a second inlet branch pipe 61 and a second outlet branch pipe 62. In this embodiment, as shown in FIG. 2, the inlet main pipe 1 is used for liquid introduce to supply coolant to the first branch pipe 5 and the second branch pipe 6. As shown in FIG. 3, the outlet main pipe 2 is used for liquid discharge, and the coolant in the first branch pipe 5 and the second branch pipe 6 flows out through the outlet main pipe 2.

In the present application, the inlet main pipe 1, the outlet main pipe 2, the first branch pipe 5, and the second branch pipe 6 are tubular structures, such as metal or plastic conduits; and the battery module unit 3 consists of battery cells forming a battery pack, a battery cabinet, or a battery box. Specifically, the battery module unit 3 may be a cabinet with multiple batteries for storing electrical energy, and the power module unit 4 may be a cabinet with power circuits for controlling the operation of the battery module unit 3; and the first branch pipe 5 being connected between the inlet main pipe 1 and the outlet main pipe 2 indicates that one end of the first branch pipe 5 is in fluid communication with the inlet main pipe 1, and another end is in fluid communication with the outlet main pipe 2.

Referring to FIG. 1, the battery module unit 3 is connected in series between the first inlet branch pipe 51 and the first outlet branch pipe 52; that is, the battery module unit 3 is located in a cooling path between the first inlet branch pipe 51 and the first outlet branch pipe 52, allowing the coolant flowing through the first inlet branch pipe 51 and the first outlet branch pipe 52 to remove heat generated by the battery module unit 3, achieving heat dissipation for the battery module unit 3.

The power module unit 4 is connected in series between the second inlet branch pipe 61 and the second outlet branch pipe 62; that is, the power module unit 4 is located in a cooling path between the second inlet branch pipe 61 and the second outlet branch pipe 62, allowing the coolant flowing through the second inlet branch pipe 61 and the second outlet branch pipe 62 to remove heat generated by the power module unit 4, thereby achieving heat dissipation for the power module unit 4.

The energy storage system provided above includes the inlet main pipe 1, the outlet main pipe 2, the first branch pipe 5, the second branch pipe 6, the battery module unit 3, and the power module unit 4, where the inlet main pipe 1 and the outlet main pipe 2 are arranged parallel to each other; the first branch pipe 5 is connected between the inlet main pipe 1 and the outlet main pipe 2 and includes the first inlet branch pipe 51 and the first outlet branch pipe 52; the second branch pipe 6 is connected between the inlet main pipe 1 and the outlet main pipe 2 and includes the second inlet branch pipe 61 and the second outlet branch pipe 62; the battery module unit 3 is connected in series between the first inlet branch pipe 51 and the first outlet branch pipe 52; and the power module unit 4 is connected in series between the second inlet branch pipe 61 and the second outlet branch pipe 62. This configuration achieves a shared cooling pipeline design for the power module unit 4 and the battery module unit 3, simplifying the cooling pipelines and reducing costs.

However, through long-term research, the inventor of the present application finds that the power module unit and the battery module unit have different cooling requirements. For example, in a 100 MW/200 MWh system, the battery module unit typically requires an inlet-outlet temperature difference of less than or equal to 3°C with a designed flow rate of 50 to 60 L/min, while the power module unit typically requires an inlet-outlet temperature difference of 8 to 10°C with a designed flow rate of 6 to 8 L/min. Moreover, a single energy storage submodule typically includes one power module unit and multiple battery module units, and the energy storage system consists of multiple energy storage submodules. Therefore, while achieving a shared cooling pipeline design for the power module unit 4 and the battery module unit 3, significant design challenges exist in how to design the cooling pipeline to ensure precise flow distribution between the power module unit and the battery module unit, improve flow uniformity among different battery module units, and effectively expel gas from the cooling pipeline.

During the research and development process, the inventor of the present application finds that traditional energy storage system/MMC-based flexible DC converter valve cooling pipeline designs typically consider the cooling of a single type of component, and therefore, existing designs do not fully consider the uniform flow distribution among different cooling components. Additionally, to expel gas from the cooling pipeline, the conventional approach is to provide an exhaust valve at the top of a water path, but this does not effectively expel gas from inside the battery module unit.

Furthermore, during the research process, the inventor finds that in related technologies, such as Chinese Patent No. 202210542237.7, a liquid cooling system and an energy storage container are disclosed, and the liquid cooling system and the energy storage container provided by therein can balance the flow distribution to each cooling unit, avoiding excessive temperature differences within the energy storage container. However, this patent still has the following three issues:
(1) It only describes the arrangement of a cooling pipeline of a battery module unit and does not consider the cooling pipeline design for a power module unit or how to match flow rates;
(2) This patent adopts a configuration where an outlet pipe of the battery module unit is connected in series with a middle outlet pipe after the outlet pipe of the battery module unit and a position of the middle outlet pipe is adjusted at the outlet pipe to achieve flow balance within battery clusters of the battery module unit. This cannot achieve flow balance among different battery module units and is not fully designed according to a reverse-return cooling piping configuration; and
(3) The cooling pipeline design does not consider how to effectively expel gas from the cooling pipeline, resulting in gas remaining within the heat exchange components of the cooling pipeline, affecting heat exchange efficiency.

Based on these considerations, the inventor of the present application makes a further improvement to the energy storage system by implementing the power module units and battery module units within the energy storage submodules in a parallel reverse-return parallel cooling circuit design, achieving consistent path lengths of the cooling pipeline. Additionally, based on the cooling flow requirements of the power module unit and battery module unit, cooling pipelines with different pipe diameters are designed for the power module unit and the battery module unit, and flow-resistance characteristics of the branches for the power module unit and battery module unit are simulated and tested. Resistance elements are added to different cooling branches to further reduce flow non-uniformity among branches. Moreover, by adjusting the positions of the inlet and outlet pipes of the submodule, coolant enters from a lower part of the power module unit/battery module unit and exits from an upper part of the power module unit/battery module unit after being heated, effectively expelling gas from the cooling pipelines within the power module unit and battery module unit. Through the above solutions, this configuration including consistent flow paths, optimized pipe diameters for water cooling, addition of resistance elements to eliminate flow resistance differences, with a bottom-in, top-out configuration for the energy storage submodule can ultimately achieve a shared cooling pipeline design, precise flow distribution, and effective gas expulsion from the cooling pipeline for the power module unit and battery module unit within the energy storage submodule.

In one embodiment, referring to FIG. 1, the first branch pipe 5 and the second branch pipe 6 are arranged in a reverse-return piping configuration. The reverse-return piping configuration indicates that the cooling branch corresponding to each battery module unit 3, including: the first inlet branch pipe 51 → the battery module unit 3 → the first outlet branch pipe 52, with a total path length of cooling branch being the same, ensuring that with identical pipe diameters, the flow rates in the cooling branches corresponding to each battery module unit 3 are substantially consistent, achieving uniform flow distribution among different battery module units 3. At the same time, the cooling branch corresponding to the power module unit 4including: the second inlet branch pipe 61 → the power module unit 4 → the second outlet branch pipe 62, with a total path length of cooling branch corresponding to each battery module unit 3 also being the same. If a resistance loss per meter of each branch is approximately equal, the resistance of each pipeline in the system can remain balanced without adjustment. Therefore, compared to other non-reverse-return liquid cooling systems, the reverse-return liquid cooling system has better flow distribution uniformity.

In a specific embodiment, the cooling branch of the battery module unit 3 consists of the first inlet branch pipe 51, the battery module unit 3, and the first outlet branch pipe 52. The cooling branch of the power module unit 4 consists of the second inlet branch pipe 61, the power module unit 4, and the second outlet branch pipe 62.

In the above solution, the first branch pipe 5 and the second branch pipe 6 are arranged in a reverse-return piping configuration, ensuring that the path lengths of the cooling pipelines corresponding to the first branch pipe 5 and the second branch pipe 6 are consistent, that is, the battery module unit 3 connected in series between the first inlet branch pipe 51 and the first outlet branch pipe 52 and the power module unit 4 connected in series between the second inlet branch pipe 61 and the second outlet branch pipe 62 correspond to cooling pipelines of the same length. Consequently, with identical pipe diameters, the flow rates in the cooling pipelines of the battery module unit 3 and the power module unit 4 are substantially consistent, achieving uniform flow distribution among different battery module units 3.

In some embodiments, the first branch pipe 5 and the second branch pipe 6 have different pipe diameters. The pipe diameter refers to an inner diameter of the corresponding branch pipe. When the first branch pipe 5 and the second branch pipe 6 are circular pipes, the pipe diameter is an inner diameter of the circular pipe. Specifically, the first inlet branch pipe 51 and the first outlet branch pipe 52 of the same first branch pipe 5 have the same pipe diameter, and the second inlet branch pipe 61 and the second outlet branch pipe 62 of the same second branch pipe 6 have the same pipe diameter.

In this embodiment, by enabling the first branch pipe 5 and the second branch pipe 6 to have different pipe diameters, even if the coolant flow required by the power module unit 4 differs from the coolant flow required by the battery module unit 3 (approximately a 10-fold difference), branch pipes with larger or smaller diameters can be selected based on actual requirements to ensure that the flow resistance of the coolant flowing through the first branch pipe 5 and the second branch pipe 6 is identical, achieving precise flow distribution between the power module unit 4 and the battery module unit 3. Specifically, a coolant flow velocity in the first branch pipe 5 and the second branch pipe 6 may range between 1.2 m/s and 2.5 m/s.

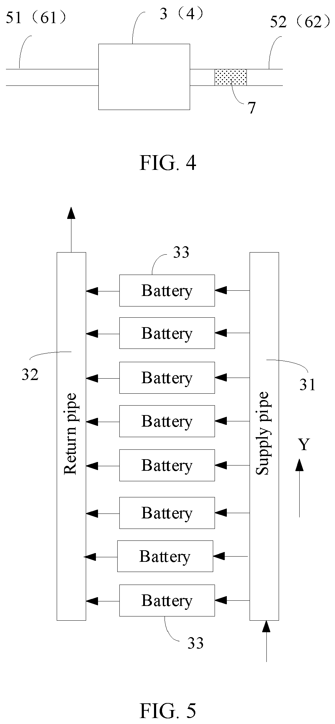

In some embodiments, referring to FIG. 4, FIG. 4 is a schematic diagram of a position of a resistance element 7 in a single-branch cooling pipeline. The energy storage system further includes a resistance element 7; the resistance element 7 is disposed within one or more of the first inlet branch pipe 51, the first outlet branch pipe 52, the second inlet branch pipe 61, and the second outlet branch pipe 62 to adjust a flow resistance within the corresponding branch pipe, thereby controlling a coolant flow rate within the corresponding branch pipe. The resistance element 7 may be a tubular structure with openings at two ends, the tubular structure is specifically sleeved within the corresponding branch pipe, and outer diameter of the tubular structure is the same as an inner diameter of the corresponding branch pipe, and an inner diameter and specific length of the tubular structure can be selected and set based on actual resistance requirements. For example, the resistance element 7 is sleeved within the first inlet branch pipe 51, the outer diameter of the resistance element 7 is the same as the inner diameter of the first inlet branch pipe 51, while the inner diameter and length of the resistance element 7 are not limited. Specifically, a material of the resistance element 7 may be the same as the material of the corresponding branch pipe.

In this embodiment, by disposing the resistance element 7 within one or more of the first inlet branch pipe 51, the first outlet branch pipe 52, the second inlet branch pipe 61, and the second outlet branch pipe 62, the resistance element 7 can be used to control the flow rate through the corresponding branch pipe, achieving precise flow distribution between the power module unit 4 and the battery module unit 3 and achieving uniform flow distribution among different battery module units 3.

In some embodiments, the design flow resistance of the power module unit 4 is greater than the design flow resistance of the battery module unit 3, the resistance element 7 is disposed within the first inlet branch pipe 51 and/or the first outlet branch pipe 52; or the design flow resistance of the power module unit 4 is less than the design flow resistance of the battery module unit 3, the resistance element 7 is disposed within the second inlet branch pipe 61 and/or the second outlet branch pipe 62.

Specifically, when the design flow resistance of the power module unit 4 is greater than the design flow resistance of the battery module unit 3, the resistance element 7 may be selectively disposed within the first inlet branch pipe 51, within the first outlet branch pipe 52, or simultaneously within both the first inlet branch pipe 51 and the first outlet branch pipe 52. Similarly, when the design flow resistance of the power module unit 4 is less than the design flow resistance of the battery module unit 3, the resistance element 7 may be selectively disposed within the second inlet branch pipe 61, within the second outlet branch pipe 62, or simultaneously within both the second inlet branch pipe 61 and the second outlet branch pipe 62.

In this embodiment, when the design flow resistance of the power module unit 4 is greater than the design flow resistance of the battery module unit 3, and the resistance element 7 is disposed within the first inlet branch pipe 51 and/or the first outlet branch pipe 52, the design flow resistance of the battery module unit 3 connected in series between the first inlet branch pipe 51 and the first outlet branch pipe 52 can also be increased by the resistance element 7, so that the design flow resistance of the power module unit 4 and the design flow resistance of the battery module unit 3 tend to be the same, thereby achieving precise flow distribution between the power module unit 4 and the battery module unit 3. Alternatively, when the design flow resistance of the power module unit 4 is less than the design flow resistance of the battery module unit 3, and the resistance element 7 is disposed within the second inlet branch pipe 61 and/or the second outlet branch pipe 62, the design flow resistance of the power module unit 4 connected in series between the second inlet branch pipe 61 and the second outlet branch pipe 62 can also be increased by the resistance element 7, so that the design flow resistance of the power module unit 4 and the design flow resistance of the battery module unit 3 tend to be the same, thereby achieving uniform flow distribution among different battery module units 3 and achieving precise flow distribution between the power module unit 4 and the battery module unit 3.

In some embodiments, a first flow channel is disposed between the first inlet branch pipe 51 and the first outlet branch pipe 52, and the battery module unit 3 is thermally connected to the first flow channel; and a second flow channel is disposed between the second inlet branch pipe 61 and the second outlet branch pipe 62, and the power module unit 4 is thermally connected to the second flow channel. The first flow channel and the second flow channel have different flow resistances.

Thermal connection refers to the connection relationship between a device and a flow channel that enables heat exchange between the two. For example, the device is in contact with a heat exchange plate, the flow channel is disposed within the heat exchange plate, or the flow channel is disposed within a heat exchange tube, and the heat exchange tube is in contact with the device, and the like. The design of the first flow channel and the second flow channel, such as meandering length, cross-sectional area, and flow path, achieves different flow resistances, uniformly distributing the flow rates of the power module unit 4 and the battery module unit 3.

In some embodiments, referring to FIG. 5, FIG. 5 is a schematic structural diagram of a battery module unit. The battery module unit 3 includes a supply pipe 31, a return pipe 32, multiple branch flow pipes (not shown in the figure), and multiple batteries 33.

The supply pipe 31 and the return pipe 32 are spaced apart along a first direction Y. The first direction Y may be a vertical direction, as exemplified in the embodiments of the present application. Certainly, the first direction Y may also be inclined at a preset angle relative to the vertical direction. A bottom end of the supply pipe 31 (i.e., a lower side in the orientation shown in FIG. 5) is in communication with the first inlet branch pipe 51 so as to connect to the inlet main pipe 1 through the first inlet branch pipe 51. A top end of the return pipe 32 (i.e., an upper side in the orientation shown in FIG. 5) is in communication with the first outlet branch pipe 52 so as to connect to the outlet main pipe 2 through the first outlet branch pipe 52. In this embodiment, the cooling branch corresponding to the battery module unit 3 specifically consists of the first inlet branch pipe 51, the supply pipe 31, multiple straight pipes, the return pipe 32, and the first outlet branch pipe 52.

Multiple branch flow pipes are spaced apart along the first direction Y and respectively connected between the supply pipe 31 and the return pipe 32; multiple branch flow pipes are arranged in a reverse-return piping configuration, indicating that the flow paths of the coolant corresponding to multiple branch flow pipes have consistent lengths. Multiple batteries 33 are stacked along the first direction Y; and each battery 33 is connected in series with one branch flow pipe.

In this embodiment, by connecting the bottom end of the supply pipe 31 of each battery module unit 3 to the inlet main pipe 1 and the top end of the return pipe 32 to the outlet main pipe 2, gas within the cooling pipelines of the battery module unit 3 can be effectively expelled. Additionally, by further arranging multiple branch flow pipes in a reverse-return piping configuration, the path lengths of the cooling branch within each battery module unit 3 are consistent, thereby ensuring uniform flow distribution among different battery module units 3.

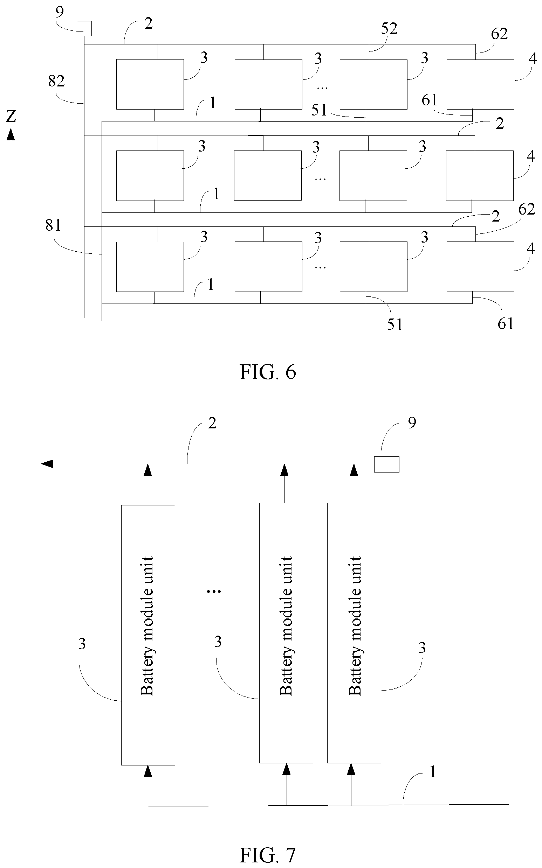

In some embodiments, referring to FIG. 6, FIG. 6 is a front view of a liquid flow direction in an energy storage system provided by an embodiment of the present application. The energy storage system further includes a valve tower (not shown); the valve tower includes multiple layers of supports, each layer of the supports is provided with an energy storage submodule, one inlet main pipe 1, one outlet main pipe 2, multiple first branch pipes 5, and one second branch pipe 6; each energy storage submodule includes one power module unit 4 and multiple battery module units 3, and multiple battery module units 3 are arranged in one-to-one correspondence with multiple first branch pipes 5, and the power module unit 4 corresponds to the second branch pipe 6. The valve tower may be suspended or floor-mounted, that is, it can be installed on the ground.

It can be understood that, in this embodiment, the structure shown in FIG. 1 is an energy storage submodule. The structure shown in FIG. 6 represents three energy storage submodules corresponding to three layers of supports. The three layers of supports may be installed on the ground through insulators.

In this embodiment, the energy storage system is a valve tower type energy storage system, enabling each energy storage submodule on the multiple layers of supports of the valve tower to achieve uniform flow distribution among different battery module units 3 and ensuring that the gas within the cooling branches of the battery module unit 3 and the power module unit 4 is effectively expelled.

In some embodiments, still referring to FIG. 6, the inlet main pipe 1 is located on a side of the battery module unit 3 and the power module unit 4 closer to the ground; that is, regardless of whether the battery module unit 3 and the power module unit 4 are side-by-side or at the same height, the inlet main pipe 1 is located on the same side of the battery module unit 3 and the power module unit 4, and on the side closer to the ground. The outlet main pipe 2 is located on a side of the battery module unit 3 and the power module unit 4 farther from the ground; that is, regardless of whether the battery module unit 3 and the power module unit 4 are side-by-side or at the same height, the outlet main pipe 2 is located on the same side of the battery module unit 3 and the power module unit 4, and on the side farther from the ground.

It can be understood that, in a vertical direction, the height of the positions of the battery module unit 3 and the power module unit 4 is higher than the height of the ground.

In other words, the cooling branch of the battery module unit 3 introduces water from the side closer to the ground and discharges water from the side farther from the ground. The water introduce and discharge method of the power module unit 4 is the same as the water introduce and discharge method of the battery module unit 3, achieving a bottom-in, top-out coolant configuration for the cooling branches of the battery module unit 3 and the power module unit 4.

In this embodiment, the inlet main pipe 1 is located on the side of the battery module unit 3 and the power module unit 4 closer to the ground, and the outlet main pipe 2 is located on the side of the battery module unit 3 and the power module unit 4 farther from the ground, a bottom-in, top-out coolant configuration is achieved for each cooling branch in the cooling pipeline, ensuring that the gas within the cooling branches of the battery module unit 3 and the power module unit 4 is effectively expelled without requiring additional exhaust valves, thereby reducing costs.

Certainly, in other embodiments, the cooling branch of the battery module unit 3 may also introduce water from the side of the battery module unit 3 farther from the ground and discharge water from the side of the battery module unit 3 closer to the ground, i.e., a top-in, bottom-out configuration. Certainly, the cooling branch of the battery module unit 3 may also introduce water from a left side of the battery module unit 3 and discharge from a right side, or introduce water from the right side and discharge water from the left side, which is not limited by the present application. The water introduce and discharge method of the power module unit 4 is similar to the water introduce and discharge method of the battery module unit 3, and may also be a top-in, bottom-out configuration, or a left-in, right-out configuration, or a right-in, left-out configuration.

In some embodiments, still referring to FIG. 6, the energy storage system further includes an inlet header pipe 81 and an outlet header pipe 82. The inlet header pipe 81 and the outlet header pipe 82 are disposed on the valve tower and extend vertically along a height direction Z of the valve tower. Specifically, the inlet header pipe 81 is connected to the inlet main pipe 1 on each layer of the supports to uniformly supply liquid to the inlet main pipe 1 on each layer. The outlet header pipe 82 is connected to the outlet main pipe 2 on each layer of the supports, allowing the liquid in the outlet main pipe 2 on each layer to flow out through the outlet header pipe 82.

As shown in FIG. 6, a height of an end of the outlet header pipe 82 farther from the ground is greater than a height of the outlet main pipe 2 corresponding to the energy storage submodule on a highest layer.

In this embodiment, the inlet header pipe 81 is connected to the inlet main pipe 1 on each layer of the supports, the outlet header pipe 82 is connected to the outlet main pipe 2 on each layer of the supports, and the height of the end of the outlet header pipe 82 farther from the ground is greater than the height of the outlet main pipe 2 corresponding to the energy storage submodule on the highest layer, ensuring that the gas within the cooling pipelines of the battery module unit 3 and the power module unit 4 in each energy storage submodule on each layer of the supports of the valve tower is effectively expelled.

In some embodiments, as shown in FIG. 6, an exhaust valve 9 is further disposed at an end of the outlet header pipe 82 farther from the ground. Due to the high outlet temperature of the outlet header pipe 82, and based on Dalton's law of partial pressures, adding the exhaust valve 9 at the end of the outlet header pipe 82 farther from the ground is more conducive to gas expulsion from the cooling pipeline.

In some embodiments, referring to FIG. 7, FIG. 7 is a front view of a liquid flow direction in an energy storage system provided by another embodiment of the present application. The energy storage system further includes a container; one power module unit 4 and multiple battery module units 3 are disposed within the container; the inlet main pipe 1 is disposed on a bottom wall of the container, and the outlet main pipe 2 is disposed on a top wall of the container with the exhaust valve 9 at one end; and multiple battery module units 3 are arranged in one-to-one correspondence with multiple first branch pipes. The energy storage system in FIG. 7 is a container-type energy storage system. During use, the container is placed on the ground, a support platform, or a vehicle, without needing to be installed on the valve tower.

The container may be an existing energy storage container. This embodiment achieves the application of the energy storage system in the field of traditional low-voltage container-type energy storage in containerized form. By disposing the inlet main pipe 1 on the bottom wall of the container and disposing the outlet main pipe 2 on the top wall of the container, a configuration of cooling pipelines introducing water from a bottom side of the container and discharging water from an upper side is achieved, thereby ensuring consistent flow paths for the cooling pipelines of different battery module units 3 within the container. Additionally, due to the upper side discharge and the exhaust valve 9 disposed at one end of the top wall of the container, the gas within the battery module units 3 can be effectively expelled, achieving uniform flow distribution and effective gas expulsion among different battery module units 3. Additionally, gas expulsion from a cooling medium improves the heat exchange efficiency of a cold plate within the battery 33, improving the operational efficiency of the battery 33.

The above descriptions are merely some embodiments of the present application, but are not intended to limit the patent scope of the present application. Any equivalent structural transformations or equivalent process transformations made by using the content of the specification and drawings or direct or indirect application of the content of the specification and drawings to other related technical fields should fall within the patent protection scope of the present application.

## Claims

1. An energy storage system, comprising:
an inlet main pipe and an outlet main pipe;
a first branch pipe, connected between the inlet main pipe and the outlet main pipe, and comprising a first inlet branch pipe and a first outlet branch pipe;
a second branch pipe, connected between the inlet main pipe and the outlet main pipe, and comprising a second inlet branch pipe and a second outlet branch pipe;
a battery module unit, connected in series between the first inlet branch pipe and the first outlet branch pipe; and
a power module unit, connected in series between the second inlet branch pipe and the second outlet branch pipe.

2. The energy storage system according to claim 1,
wherein the first branch pipe and the second branch pipe are arranged in a reverse-return piping configuration.

3. The energy storage system according to claim 2, wherein the first branch pipe and the second branch pipe have different pipe diameters.

4. The energy storage system according to claim 2 or 3, further comprising a resistance element; wherein the resistance element is disposed within one or more of the first inlet branch pipe, the first outlet branch pipe, the second inlet branch pipe, and the second outlet branch pipe.

5. The energy storage system according to claim 4, wherein a design flow resistance of the power module unit is greater than a design flow resistance of the battery module unit, and the resistance element is disposed within the first inlet branch pipe and/or the first outlet branch pipe; or
a design flow resistance of the power module unit is less than a design flow resistance of the battery module unit, and the resistance element is disposed within the second inlet branch pipe and/or the second outlet branch pipe.

6. The energy storage system according to claim 1, wherein a first flow channel is disposed between the first inlet branch pipe and the first outlet branch pipe, the battery module unit is thermally connected to the first flow channel, a second flow channel is disposed between the second inlet branch pipe and the second outlet branch pipe, the power module unit is thermally connected to the second flow channel, and the first flow channel and the second flow channel have different flow resistances.

7. The energy storage system according to any one of claims 1 to 3, wherein the inlet main pipe is located on a side of the battery module unit and the power module unit closer to a ground, and the outlet main pipe is located on a side of the battery module unit and the power module unit farther from the ground.

8. The energy storage system according to claim 7, wherein the battery module unit comprises a supply pipe and a return pipe spaced apart along a first direction, multiple branch flow pipes spaced apart along the first direction and connected between the supply pipe and the return pipe, and multiple batteries stacked along the first direction; each battery is connected in series with one branch flow pipe; a bottom end of the supply pipe is connected to the inlet main pipe, and a top end of the return pipe is connected to the outlet main pipe; and multiple branch flow pipes are arranged in a reverse-return piping configuration.

9. The energy storage system according to claim 7 or 8, further comprising a valve tower; wherein the valve tower comprises multiple layers of supports, each layer of the supports is provided with an energy storage submodule, one inlet main pipe, one outlet main pipe, multiple first branch pipes, and one second branch pipe; and each energy storage submodule comprises one power module unit and multiple battery module units, and multiple battery module units are arranged in one-to-one correspondence with multiple first branch pipes.

10. The energy storage system according to claim 9, further comprising an inlet header pipe and an outlet header pipe; wherein the inlet header pipe and the outlet header pipe are disposed on the valve tower and extend along a height direction of the valve tower; the inlet header pipe is connected to the inlet main pipe on each layer of the supports, and the outlet header pipe is connected to the outlet main pipe on each layer of the supports; and a height of an end of the outlet header pipe farther from a ground is greater than a height of the outlet main pipe corresponding to the energy storage submodule on a highest layer.

11. The energy storage system according to claim 10, wherein an exhaust valve is further disposed at an end of the outlet header pipe farther from a ground.

12. The energy storage system according to claim 7 or 8, further comprising a container; wherein one power module unit and multiple battery module units are disposed within the container; the inlet main pipe is disposed on a bottom wall of the container, and the outlet main pipe is disposed on a top wall of the container with an exhaust valve at one end; and multiple battery module units are arranged in one-to-one correspondence with multiple first branch pipes.
